# EUROPEAN PATENT SPECIFICATION

(11) **EP 2 849 268 B1**
(45) Date of publication and mention of the grant of the patent: **20.04.2016**
(21) Application number: 14182115.7
(22) Date of filing: 25.08.2014
(51) Int. Cl.: H01M 4/62, H01M 10/08

(54) **Valve regulated lead-acid battery, method for producing the same, and motorcycle**
Ventilgeregelte Bleisäurebatterie, Verfahren zur Herstellung davon und Motorrad
Batterie au plomb-acide régulée par vanne, son procédé de production et motocyclette

(30) Priority: 12.09.2013 JP 2013189158; 04.06.2014 JP 2014115432
(43) Date of publication of application: 18.03.2015
(73) Proprietor: GS Yuasa International Ltd., Kisshoin, Minami-ku, Kyoto-shi, Kyoto 601-8520 (JP)
(72) Inventor: Harada, Aya, Kyoto-shi, Kyoto 601-8520 (JP); Tsutsumi, Takao, Kyoto-shi, Kyoto, 601-8520 (JP)
(74) Representative: Isarpatent

(56) References cited:
- WO-A1-2013/128941
- JP-A- 2005 190 686
- JP-A- 2011 181 436
- US-A1- 2012 070 728

## Description

### CROSS-REFERENCE TO RELATED APPLICATIONS

This application is based on Japanese Patent Applications No. 2013-189158 filed on September 12, 2013, and No. 2014-115432 filed on June 4, 2014.

### FIELD

The present invention relates to a valve regulated lead-acid battery, and a method for producing the same.

### BACKGROUND

Penetration short-circuit may be caused in a valve regulated lead-acid battery. Penetration short-circuit occurs between a positive electrode and a negative electrode through a separator. With respect to this phenomenon, JP-A-2005-190686 discloses sticking paste paper impregnated with colloidal silica on the surfaces of a positive electrode plate and a negative electrode plate.

Other prior arts concerning silica will be described. JP-A-2011-181436 discloses a lead-acid battery for an idling stop vehicle, in which an electrode plate has colloidal silica applied onto the surface thereof. JP-A-2011-181436 describes that life performance of a lead-acid battery used in an idling stop application is improved by colloidal silica.

JP-A-H08-298118 discloses coating a lignin powder, which is to be added to a lead-acid battery, with colloidal silica.

### SUMMARY

The following presents a simplified summary of the invention disclosed herein in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present inventors made investigation not to transfer Si from paste paper to the surface of a plate but to impregnate the plate with Si. In this case, an optimum concentration of Si varied from the value described in JP-A-2005-190686. A thickness of a surface layer containing Si (hereinafter, referred to as "surface layer") and a concentration of Si in the surface layer had an influence on the presence or absence of penetration short-circuit, high rate discharge performance, and the like. Moreover, a concentration of an alkali metal ion in an electrolyte solution also had an influence on the effect of Si.

It is an object of the present invention to prevent penetration short-circuit during formation.

It is another object of the present invention to provide a valve regulated lead-acid battery which does not cause penetration short-circuit.

It is still another object of the present invention to provide a valve regulated lead-acid battery which can maintain high rate discharge capacity and charge acceptance performance in allowable ranges while preventing penetration short-circuit.

It is still another object of the present invention to provide a new constitution of a valve regulated lead-acid battery containing Si.

It is a further object of the present invention to provide a method for producing a valve regulated lead-acid battery, by which Si can be easily contained in a negative electrode plate.

A first aspect of the present invention provides a valve regulated lead-acid battery comprising a negative electrode plate, a positive electrode plate, and a solution-retainer interposed between the negative electrode plate and the positive electrode plate and retaining an electrolyte solution, wherein the negative electrode plate includes a surface layer in which Si is contained in an electrode material, and an alkali metal element is contained in the electrolyte solution.

### BRIEF DESCRIPTION OF THE DRAWINGS

The foregoing and other features of the present invention will become apparent from the following description and drawings of an illustrative embodiment of the invention in which:

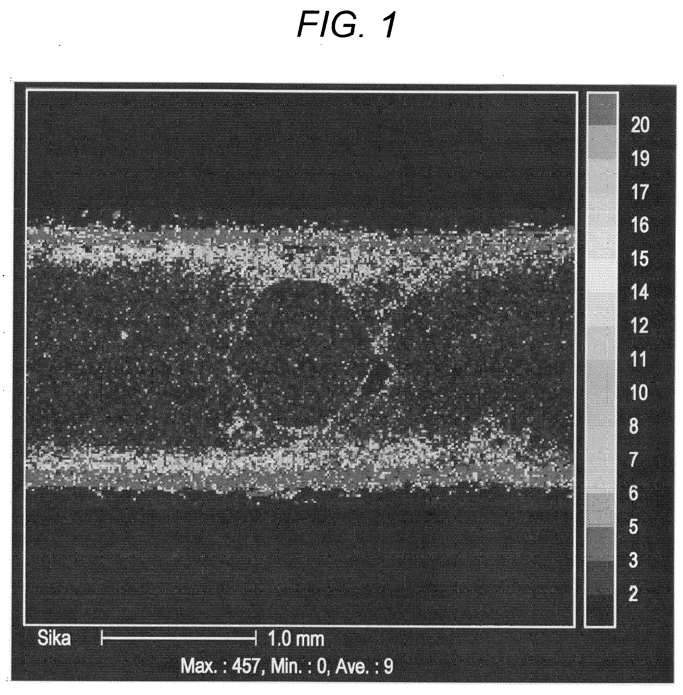

Fig. 1 shows an EPMA photograph of a cross section of a negative electrode plate in which a thickness of a surface layer is 0.1 mm and a concentration of Si in the surface layer in a negative electrode material is 15% by mass.

### DETAILED DESCRIPTION

A first aspect of the present invention provides a valve regulated lead-acid battery comprising a negative electrode plate, a positive electrode plate, and a solution-retainer interposed between the negative electrode plate and the positive electrode plate and retaining an electrolyte solution, wherein the negative electrode plate includes a surface layer in which Si is contained in an electrode material, and an alkali metal element is contained in the electrolyte solution.

Preferably, a concentration of Si in a spongy lead in the surface layer is 15% by mass or more and 30% by mass or less in SiO2 equivalent.

The surface layer preferably has a thickness of 0.03 mm or more and 0.3 mm or less.

The alkali metal element may be selected from a group consisting of Na, Li and K. Among them, Na is preferred.

The alkali metal element is preferably contained in an amount of 5 g/L or more and 25 g/L or less, and more preferably contained in an amount of 10 g/L or more and 20 g/L or less in the electrolyte solution in sulfate equivalent.

Preferably, Na is contained as the alkali metal element in an amount of 10 g/L or more and 20 g/L or less in the electrolyte solution in sulfate equivalent.

In the surface layer, Si may exist in pores in the electrode material.

The surface layer preferably has a thickness of 0.1 mm or more and 0.3 mm or less, and more preferably has a thickness of 0.1 mm or more and 0.2 mm or less.

A second aspect of the present invention provides a method for producing a valve regulated lead-acid battery comprising a negative electrode plate, a positive electrode plate, and a solution-retainer interposed between the negative electrode plate and the positive electrode plate and retaining an electrolyte solution. The method comprises a step of forming on a surface of the negative electrode plate a surface layer in which Si is contained in an electrode material, by formation or charging of the negative electrode plate in a solution including Si in the form of colloidal silica or the like and sulfuric acid; and a step of allowing an alkali metal element to be contained in the electrolyte solution.

Preferably, the step of forming on a surface of the negative electrode plate a surface layer in which Si is contained in an electrode material is first performed, and then the step of allowing an alkali metal element to be contained in the electrolyte solution is performed.

In the present specification, the negative electrode material refers to a negative active material such as spongy lead, lead sulfate, carbon black, lignin and barium sulfate, a material obtained by change of the negative active material, and a material to be added to the negative active material, and does not include sulfuric acid and Si. The surface layer is not a layer mainly including Si as distinct from the surface layer of JP-A-2005-190686, and includes an electrode material as a main component and Si as an auxiliary component. The surface layer prevents lead sulfate from penetrating through the solution-retainer to cause short-circuit. Incidentally, the surface layer may include alkali metal ions such as Na⁺, sulfate ions, and the like. Further, in the present specification, a concentration of Si is indicated on the mass basis in SiO2 equivalent in the spongy lead in the surface layer (a layer including Si in a high concentration, hereinafter, may be simply referred to as "surface layer") of the negative electrode plate, and a unit of the concentration is % by mass.

In order to form the surface layer, for example, a method, in which in formation or charging, Si in the form of colloidal silica or the like and sulfuric acid are allowed to be contained in the electrolyte solution, and a material such as colloidal silica positively charged by sulfuric acid is electrophoresed to the negative electrode plate by a formation current or a charge current, may be employed. Thus, a surface layer, in which Si is dispersed in the electrode material, is formed. The present method does not need paste paper as distinct from that in JP-A-2005-190686. Si is moved into the negative electrode material by electrophoresis or the like, and mostly exists in pores in the negative electrode material.

The surface layer preferably has a thickness of 0.03 mm or more and 0.3 mm or less, and when the thickness falls within this range, penetration short-circuit during formation can be prevented. More preferably, the surface layer has a thickness of 0.1 mm or more and 0.2 mm or less, and a concentration of Si in the surface layer is preferably 15% by mass or more and 30% by mass or less. When the thickness and the concentration of Si fall within these ranges, penetration short-circuit can be more effectively prevented, and drawbacks such as reductions in high rate discharge performance and charge acceptance performance can be prevented. In order to control the thickness of the surface layer and the concentration of Si, for example, the concentration of Si in the electrolyte solution may be controlled. Beside this, even by controlling a time during which the negative electrode plate is immersed in the electrolyte solution prior to formation or charging, or a time taken for formation or charging, the thickness of the surface layer and the concentration of Si can also be controlled.

Further, the alkali metal element, for example, Na, Li, and K can be used alone or in combination of two or more thereof. Na is preferably used. The alkali metal element is preferably contained in an amount of 5 g/L or more and 25 g/L or less, and more preferably contained in an amount of 10 g/L or more and 20 g/L or less in the electrolyte solution in sulfate equivalent. Particularly, when a concentration of Na in the electrolyte solution is set to 10 g/L or more and 20 g/L or less in the electrolyte solution in sulfate equivalent, the thickness of the surface layer is 0.1 mm or more and 0.2 mm or less, and the concentration of Si is 15% by mass or more and 30% by mass or less, penetration short-circuit can be prevented with reliability. Moreover, reductions in high rate discharge performance and charge acceptance performance can be prevented.

The valve regulated lead-acid battery according to the aspects of the present invention is suitable for, for example, a motorcycle. A third aspect of the present invention also pertains to a motorcycle having the above-mentioned valve regulated lead-acid battery.

Optimum examples of the present invention will be described below. In carrying out the present invention, Examples may be appropriately modified according to common sense of those skilled in the art and disclosure of the prior art.

### Examples

### Production of Negative Electrode Plate

A negative electrode grid obtained by casting of a Pb-Ca-Sn based alloy was filled with a paste formed by adding sulfuric acid to a negative electrode material having the following composition, and aging and drying were performed. A negative electrode material: a mixture of 100% by mass of lead oxide produced by a ball mill method, 0.3% by mass of carbon black, 0.1% by mass of lignin, 0.6% by mass of barium sulfate and 0.1 % by mass of a synthetic resin fiber. Incidentally, the type, composition and production method of the negative electrode material were arbitrarily selected.

### Production of Positive Electrode Plate

Similarly, a positive electrode grid obtained by casting of a Pb-Ca-Sn based alloy was filled with a paste formed by adding sulfuric acid to a positive electrode material having the following composition, and aging and drying were performed. A positive electrode material: a mixture of 100% by mass of a lead oxide produced by a ball mill method and 0.1 % by mass of a synthetic resin fiber. Incidentally, the type, composition and production method of the positive electrode material were arbitrarily selected.

### Formation

The positive electrode plate and the negative electrode plate were immersed in an electrolyte solution including colloidal silica and sulfuric acid, and the resultant was left standing at room temperature for a predetermined time, followed by tank formation. Since a concentration of the colloidal silica was low, the colloidal silica did not gelate, was positively charged by sulfuric acid, electrophoresed by a formation current, and diffused into the electrode material on the surface of the negative electrode plate to form a surface layer. A concentration of Si on the surface of the positive electrode plate after formation was extremely low, and therefore it could be believed that the total amount of colloidal silica added was diffused on the surface of the negative electrode plate. By varying a time to immerse the positive electrode plate and the negative electrode plate in the electrolyte solution before formation, and a concentration of colloidal silica in the electrolyte solution, a thickness of the surface layer and a concentration of Si in the surface layer were changed to thereby search conditions in which a desired thickness of the surface layer and a desired Si concentration were achieved. The positive electrode plate and the negative electrode plate after formation were washed with water and dried, and these electrode plates, with a glass fiber separator of a solution-retainer interposed therebetween, were set up in a container in a state of being pressed. Dilute sulfuric acid having a specific gravity of 1.28 and sodium sulfate were added and auxiliary charge was performed to fabricate three valve regulated lead-acid batteries for a motorcycle of 12V and 16Ah for every thickness of the surface layer and every concentration of Si.

Here, an alkali metal compound such as lithium sulfate or potassium sulfate may be added to the electrolyte solution in place of sodium sulfate. Further, silica gel may be used as a solution-retainer in place of a glass mat separator. The surface layer of silica (Si surface layer) may be formed during formation, or silica may be added after formation to form a surface layer of silica (Si surface layer) by charging.

A concentration of the alkali metal element of the electrolyte solution obtained from the lead-acid battery can be quantitatively determined by ICP-AES (Inductively Coupled Plasma Atomic Emission Spectroscopy).

### Initial Performance

The battery after auxiliary charge was disassembled, the separator was peeled off from the surface and observed. When a trace of short-circuit was observed, it was considered that penetration short-circuit occurred. With the battery not disassembled, a discharge duration time in discharging at 100 A up to an end voltage of 6.0 V was measured, and defined as high rate discharge performance. Further, the battery was charged at an upper limit current of 20 A of 14.4 V at room temperature for 5 minutes after the high rate discharge, and an amount charged during this time was defined as charge acceptance performance.

### Overdischarge Test and Observation of Surface Layer

After measurement of the initial performance, a short-circuit resistance of 2.4 Ω was connected between terminals of the storage battery, and the storage battery was discharged for at most 30 days in a water bath at 40°C until the pH of the electrolyte solution reached 6. When the pH reached 6, one storage battery was disassembled, and the presence or absence of penetration short-circuit was checked and the surface layer was observed. The thickness of the surface layer can be measured by observation of the cross section (cross section perpendicular to the surface) of the negative electrode plate by EPMA (electron prove micro analysis). For example, an EPMA image of the cross section of a negative electrode plate having a thickness of the surface layer of 0.1 mm and a concentration of Si in the surface layer of 15% by mass in SiO2 equivalent is shown in Fig. 1. A bright layer was observed slightly at the inner side of the surface of the negative electrode plate, and a somewhat dark layer outside this was a surface layer and existed in a region on the hither side of a grid. There were the surface layers on both surfaces of the negative electrode plate, and the thickness was a value at each surface layer. For example, when a surface layer having a thickness of 0.1 mm was disposed on the negative electrode plate having a thickness of 2 mm, the total thickness of the surface layer was 0.2 mm.

When the negative electrode plate was subjected to EPMA analysis in a state where the battery was discharged until the pH of the electrolyte solution reached 6, it was possible to detect a layer in which Si existed in a high concentration. The electrode material was peeled off in a thickness equal to or smaller than the thickness of this layer, washed with water and dried to prepare a sample. A concentration of Si of the sample was quantitatively determined by ICP-AES (Inductively Coupled Plasma Atomic Emission Spectroscopy). As required, a calibration curve was created by using a standard sample prepared by adding a known amount of Si to the electrode material. The pH at the time of measurement is preferably 6; however, the pH is not limited to this value.

Recovered charge of the remaining battery was performed at 1.6 A for 12 hours, and high rate discharge performance was measured in the same manner as in the measurement of the initial performance. Thereafter, the storage battery was disassembled, and the presence or absence of penetration short-circuit was observed in the same manner as in the case of the penetration short-circuit after formation. The thickness and the concentration of Si of the surface layer, the concentration of Na in the electrolyte solution, the presence or absence of penetration short-circuit, the initial acceptance performance, and the high rate discharge capacity after formation and after left under overdischarge are shown together in Table 1. Incidentally, "after formation", and "after left under overdischarge" represent the timing of measurement. The performance of the storage battery was represented by relative performance in which a performance level of a control storage battery not having a surface layer and containing Na in an amount of 10 g/L in sulfate equivalent in the electrolyte solution was assumed to be 100. Here, the high rate discharge capacity retention ratio after overdischarge is not a relative value relative to the control but a ratio of the high rate discharge capacity after overdischarge to the initial value of the high rate discharge capacity.

**[Table 1]**

| Sample | Si | | Na | After Formation | | | After Left under Overdischarge | |
|---|---|---|---|---|---|---|---|---|
| | Thickness (mm) | Content (mass%) | Concentration in Electrolyte Solution (g/L) | Penetration Short-circuit^{*1} (presence or absence) | High Rate Discharge Capacity^{*2} | Acceptance Performance^{*3} | Penetration Short-circuit^{*1} (presence or absence) | High Rate Discharge Capacity Retention Ratio^{*4} |
| Control | 0 | 0 | 10 | ○ | 100 | 100 | × | 90 |
| 1 | 0 | 0 | 0 | × | unmeasurable | unmeasurable | - | - |
| 2 | 0.1 | 15 | 0 | ○ | 95 | 95 | × | 80 |
| 3 | 0.1 | 15 | 5 | ○ | 95 | 95 | ○ | 75 |
| 4 | 0.1 | 15 | 10 | ○ | 95 | 95 | ○ | 95 |
| 5 | 0.1 | 15 | 15 | ○ | 95 | 95 | ○ | 95 |
| 6 | 0.1 | 15 | 20 | ○ | 95 | 90 | ○ | 95 |
| 7 | 0.1 | 15 | 25 | ○ | 95 | 85 | ○ | 95 |
| 8 | 0.1 | 10 | 10 | ○ | 98 | 98 | × | 90 |
| 9 | 0.1 | 20 | 10 | ○ | 93 | 93 | ○ | 85 |
| 10 | 0.1 | 30 | 10 | ○ | 90 | 90 | ○ | 80 |
| 11 | 0.1 | 40 | 10 | ○ | 85 | 80 | ○ | 80 |
| 12 | 0.03 | 15 | 10 | ○ | 100 | 100 | × | 95 |
| 13 | 0.05 | 15 | 10 | ○ | 97 | 95 | × | 95 |
| 14 | 0.2 | 15 | 10 | ○ | 90 | 90 | ○ | 80 |
| 15 | 0.3 | 15 | 10 | ○ | 83 | 80 | ○ | 85 |

| | | | | | | | | |
|---|---|---|---|---|---|---|---|---|
| *1 When penetration short-circuit occurred, sample was rated as not good (×) *2 When high rate discharge capacity after formation was 90 or more, sample was rated as good (○) *3 When acceptance performance after formation was 90 or more, sample was rated as good (○) *4 When high rate discharge capacity retention ratio after left under overdischarge was 80 or more, sample was rated as good (○) In *2 and *3, performance value of control was assumed to be 100 for conversion, and in *4, the initial value of the high rate discharge capacity was assumed to be 100 for conversion | | | | | | | | |

In sample 1 in which the surface layer of Si was not present and the electrolyte solution did not contain an alkali metal element, penetration short-circuit occurred during formation and initial performance could not be measured. On the other hand, in sample 2 not containing the alkali metal element and having the surface layer of Si, penetration short-circuit occurred by charging after overdischarge, but penetration short-circuit during formation did not occur, and initial performance and high rate discharge capacity after overdischarge were maintained within practical ranges. Further, when the alkali metal element was added to the electrolyte solution, penetration short-circuit after left under overdischarge could also be resolved, and particularly when the concentration of Na was 10 g/L or more and 20 g/L or less in sulfate equivalent, initial performance and high rate discharge capacity after overdischarge could also be maintained within practical ranges.

The surface layer containing Si preferably has a thickness of 0.03 mm or more and 0.3 mm or less in order to prevent penetration short-circuit during formation, more preferably has a thickness of 0.1 mm or more in order to prevent short-circuit after left under overdischarge, and moreover preferably has a thickness of 0.2 mm or less in order to maintain initial performance. Further, when the concentration of Si is 15% by mass or more and 30% by mass or less in SiO2 equivalent, penetration short-circuit can be prevented with reliability, and initial performance and high rate discharge capacity after overdischarge can also be maintained within practical ranges.

In Examples, the following effects were achieved.
1) It is possible to prevent penetration short-circuit during formation.
2) It is possible to prevent the occurrence of penetration short-circuit and maintain initial performance and high rate discharge performance after left under overdischarge within practical ranges.
3) The surface layer containing Si can be formed without using paste paper.
4) A valve regulated lead-acid battery suitable for a motorcycle is attained because of these effects.

## Claims

1. A valve regulated lead-acid battery comprising:
a negative electrode plate;
a positive electrode plate; and
a solution-retainer interposed between the negative electrode plate and the positive electrode plate and retaining an electrolyte solution,
wherein the negative electrode plate includes a surface layer in which Si is contained in an electrode material, and
an alkali metal element is contained in the electrolyte solution.

2. The valve regulated lead-acid battery according to claim 1, wherein a concentration of Si in a spongy lead in the surface layer is 15% by mass or more and 30% by mass or less in SiO2 equivalent.

3. The valve regulated lead-acid battery according to claim 1 or 2, wherein the surface layer has a thickness of 0.03 mm or more and 0.3 mm or less.

4. The valve regulated lead-acid battery according to any one of claims 1 to 3, wherein the alkali metal element is selected from a group consisting of Na, Li and K.

5. The valve regulated lead-acid battery according to any one of claims 1 to 4, wherein the alkali metal element is contained in an amount of 5 g/L or more and 25 g/L or less in the electrolyte solution in sulfate equivalent.

6. The valve regulated lead-acid battery according to any one of claims 1 to 5, wherein the alkali metal element is Na.

7. The valve regulated lead-acid battery according to any one of claims 1 to 6, wherein the alkali metal element is contained in an amount of 10 g/L or more and 20 g/L or less in the electrolyte solution in sulfate equivalent.

8. The valve regulated lead-acid battery according to any one of claims 1 to 7, wherein Na is contained as the alkali metal element in an amount of 10 g/L or more and 20 g/L or less in the electrolyte solution in sulfate equivalent.

9. The valve regulated lead-acid battery according to any one of claims 1 to 8, wherein in the surface layer, Si exists in pores in the electrode material.

10. The valve regulated lead-acid battery according to any one of claims 1 to 9, wherein the surface layer has a thickness of 0.1 mm or more and 0.3 mm or less.

11. The valve regulated lead-acid battery according to any one of claims 1 to 10, wherein the surface layer has a thickness of 0.1 mm or more and 0.2 mm or less.

12. A valve regulated lead-acid battery for a motorcycle according to any one of claims 1 to 11.

13. A motorcycle in which the valve regulated lead-acid battery according to any one of claims 1 to 12 is mounted.

14. A method for producing a valve regulated lead-acid battery comprising a negative electrode plate, a positive electrode plate, and a solution-retainer interposed between the negative electrode plate and the positive electrode plate and retaining an electrolyte solution, the method comprising:
a step of forming on a surface of the negative electrode plate a surface layer in which Si is contained in an electrode material, by formation or charging of the negative electrode plate in a solution including Si and sulfuric acid; and
a step of allowing an alkali metal element to be contained in the electrolyte solution.

15. The method for producing a valve regulated lead-acid battery according to claim 14, wherein the step of forming on a surface of the negative electrode plate a surface layer in which Si is contained in an electrode material is first performed, and then the step of allowing an alkali metal element to be contained in the electrolyte solution is performed.

## Patentansprüche

1. Ventilgeregelte Blei-Säure-Batterie, umfassend:
eine negative Elektrodenplatte;
eine positive Elektrodenplatte; und
einen Lösungsmittelrückhalter ("solution retainer"), der zwischen der negativen Elektrodenplatte und der positiven Elektrodenplatte eingebracht ist und der eine Elektrolytlösung zurückhält ("retaining"),
wobei die negative Elektrodenplatte eine Oberflächenschicht beinhaltet, in der Si in einem Elektrodenmaterial enthalten ist, und
ein Alkalimetallelement in der Elektrolytlösung enthalten ist.

2. Ventilgeregelte Blei-Säure-Batterie nach Anspruch 1, wobei eine Konzentration an Si in einem schwammförmigen Blei in der Oberflächenschicht 15 Massen% oder mehr und 30 Massen% oder weniger in SiO2-Äquivalenten ist.

3. Ventilgeregelte Blei-Säure-Batterie nach Anspruch 1 oder 2, wobei die Oberflächenschicht eine Dicke von 0,03 mm oder mehr und 0,3 mm oder weniger hat.

4. Ventilgeregelte Blei-Säure-Batterie nach einem der Ansprüche 1 bis 3, wobei das Alkalimetallelement ausgewählt ist aus einer Gruppe, bestehend aus Na, Li und K.

5. Ventilgeregelte Blei-Säure-Batterie nach einem der Ansprüche 1 bis 4, wobei das Alkalimetallelement in einer Menge von 5 g/L oder mehr und 25 g/L oder weniger in der Elektrolytlösung in Sulfat-Äquivalenten enthalten ist.

6. Ventilgeregelte Blei-Säure-Batterie nach einem der Ansprüche 1 bis 5, wobei das Alkalimetallelement Na ist.

7. Ventilgeregelte Blei-Säure-Batterie nach einem der Ansprüche 1 bis 6, wobei das Alkalimetallelement in einer Menge von 10 g/L oder mehr und 20 g/L oder weniger in der Elektrolytlösung in Sulfat-Äquivalenten enthalten ist.

8. Ventilgeregelte Blei-Säure-Batterie nach einem der Ansprüche 1 bis 7, wobei Na als das Alkalimetallelement in einer Menge von 10 g/L oder mehr und 20 g/L oder weniger in der Elektrolytlösung in Sulfat-Äquivalenten enthalten ist.

9. Ventilgeregelte Blei-Säure-Batterie nach einem der Ansprüche 1 bis 8, wobei in der Oberflächenschicht Si in Poren im Elektrodenmaterial vorliegt.

10. Ventilgeregelte Blei-Säure-Batterie nach einem der Ansprüche 1 bis 9, wobei die Oberflächenschicht eine Dicke von 0,1 mm oder mehr und 0,3 mm oder weniger hat.

11. Ventilgeregelte Blei-Säure-Batterie nach einem der Ansprüche 1 bis 10, wobei die Oberflächenschicht eine Dicke von 0,1 mm oder mehr und 0,2 mm oder weniger hat.

12. Ventilgeregelte Blei-Säure-Batterie für ein Motorrad nach einem der Ansprüche 1 bis 11.

13. Motorrad, in der die ventilgeregelte Blei-Säure-Batterie gemäß einem der Ansprüche 1 bis 12 eingebaut ist.

14. Verfahren zur Herstellung einer ventilgeregelten Blei-Säure-Batterie umfassend eine negative Elektrodenplatte, eine positive Elektrodenplatte, und einen Lösungsmittelrückhalter ("solution retainer"), der zwischen der negativen Elektrodenplatte und der positiven Elektrodenplatte eingebracht ist und der eine Elektrolytlösung zurückhält ("retaining"), das Verfahren umfassend:
einen Schritt des Bildens einer Oberflächenschicht auf einer Oberfläche der negativen Elektrodenplatte, in der Si in einem Elektrodenmaterial enthalten ist, durch Bilden oder Laden der negativen Elektrodenplatte in einer Lösung beinhaltend Si und Schwefelsäure; und
einen Schritt, bei dem zugelassen wird, dass ein Alkalimetallelement in der Elektrolytlösung enthalten ist.

15. Verfahren zur Herstellung einer ventilgeregelten Blei-Säure-Batterie nach Anspruch 14, wobei der Schritt des Bildens einer Oberflächenschicht auf einer Oberfläche der negativen Elektrodenplatte, in der Si in einem Elektrodenmaterial enthalten ist, zuerst durchgeführt wird, und dann der Schritt, bei dem zugelassen wird, dass ein Alkalimetallelement in der Elektrolytlösung enthalten ist, durchgeführt wird.

## Revendications

1. Batterie plomb-acide régulée par vanne comprenant :
une plaque d'électrode négative ;
une plaque d'électrode positive ; et
une rétention pour une solution interposée entre la plaque d'électrode négative et la plaque d'électrode positive et retenant une solution d'électrolyte,
dans laquelle la plaque d'électrode négative comprend une couche de surface dans laquelle du Si est contenu dans un matériau pour électrode, et
un élément de métal alcalin est contenu dans la solution d'électrolyte.

2. Batterie plomb-acide régulée par vanne selon la revendication 1, dans laquelle la concentration en Si dans un plomb spongieux de la couche de surface est égale ou supérieure à 15 % en masse et est égale ou inférieure à 30 % en masse en équivalent Si02.

3. Batterie plomb-acide régulée par vanne selon les revendications 1 ou 2, dans laquelle la couche de surface a une épaisseur égale ou supérieure à 0,03 mm et égale ou inférieure à 0,3 mm.

4. Batterie plomb-acide régulée par vanne selon l'une quelconque des revendications 1 à 3, dans laquelle l'élément en métal alcalin est choisi dans le groupe constitué du Na, du Li et du K.

5. Batterie plomb-acide régulée par vanne selon l'une quelconque des revendications 1 à 4, dans laquelle l'élément de métal alcalin est présent dans une quantité égale ou supérieure à 5 g/l et est égale ou inférieure à 25 g/l en équivalent sulfate dans la solution d'électrolyte.

6. Batterie plomb-acide régulée par vanne selon l'une quelconque des revendications 1 à 5, dans laquelle l'élément de métal alcalin est du Na.

7. Batterie plomb-acide régulée par vanne selon l'une quelconque des revendications 1 à 6, dans laquelle l'élément de métal alcalin est présent dans une quantité égale ou supérieure à 10 g/l et est égale ou inférieure à 20 g/l en équivalent sulfate dans la solution d'électrolyte.

8. Batterie plomb-acide régulée par vanne selon l'une quelconque des revendications 1 à 7, dans laquelle le Na est présent en tant qu'élément de métal alcalin dans une quantité égale ou supérieure à 10 g/l et égale ou inférieure à 20 g/l en équivalent sulfate dans la solution d'électrolyte.

9. Batterie plomb-acide régulée par vanne selon l'une quelconque des revendications 1 à 8, dans laquelle, dans la couche de surface, le Si est présent dans les pores du matériau d'électrode.

10. Batterie plomb-acide régulée par vanne selon l'une quelconque des revendications 1 à 9, dans laquelle la couche de surface a une épaisseur égale ou supérieure à 0,1 mm et égale ou inférieure à 0,3 mm.

11. Batterie plomb-acide régulée par vanne selon l'une quelconque des revendications 1 à 10, dans laquelle la couche de surface a une épaisseur égale ou supérieure à 0,1 mm et égale ou inférieure à 0,2 mm.

12. Batterie plomb-acide régulée par vanne pour une motocyclette selon l'une quelconque des revendications 1 à 11.

13. Motocyclette sur laquelle est installée une batterie plomb-acide régulée par vanne selon l'une quelconque des revendications 1 à 12.

14. Procédé de fabrication d'une batterie plomb-acide régulée par vanne comprenant une plaque d'électrode négative, une plaque d'électrode positive, et une rétention pour une solution interposée entre la plaque d'électrode négative et la plaque d'électrode positive et retenant une solution d'électrolyte, le procédé comprenant :
une étape de formation d'une couche de surface à la surface de la plaque d'électrode négative dans laquelle du Si est contenu dans un matériau pour électrode, par la formation ou le chargement de la plaque d'électrode négative dans une solution contenant du Si et de l'acide sulfurique, et
une étape permettant à un élément en métal alcalin d'être contenu dans la solution d'électrolyte.

15. Procédé de fabrication d'une batterie plomb-acide régulée par vanne selon la revendication 14, dans laquelle l'étape de formation, à la surface de la plaque de l'électrode négative, d'une couche de surface dans laquelle du Si est présent dans un matériau pour électrode est réalisée en premier lieu, et ensuite l'étape est réalisée pour permettre à un élément de métal alcalin d'être présent dans la solution d'électrolyte.
